Europäisches Patentamt

European Patent Office

Office européen des brevets

(19)

(11) Numéro de publication: **0 244 283**
B1

## (12) FASCICULE DE BREVET EUROPEEN

(45) Date de publication du fascicule du brevet:
24.01.90

(21) Numéro de dépôt: 87400781.8

(22) Date de dépôt: 07.04.87

(51) Int. Cl.⁴: **F22B 37/00**, F28F 11/00, B23P 19/02, B21D 39/06

(54) Procédé et dispositif de chemisage à distance d'un tube de générateur de vapeur d'un réacteur nucléaire à eau sous pression.

(30) Priorité: 30.04.86 FR 8606342

(43) Date de publication de la demande:
04.11.87 Bulletin 87/45

(45) Mention de la délivrance du brevet:
24.01.90 Bulletin 90/4

(84) Etats contractants désignés:
BE CH DE ES GB IT LI SE

(56) Documents cités:
EP-A- 0 139 494
EP-A- 0 152 778
EP-A- 0 153 670
DE-A- 3 333 533

KERNTECHNIK,
vol. 19, no. 3, 1977, pages 110-116, Munich, DE; B.J.
SELIG: "Nuclear systems inspection services"

(73) Titulaire: FRAMATOME, Tour Fiat 1, Place de la Coupole,
F-92400 Courbevoie(FR)

(72) Inventeur: Cartry, Jean-Pierre, 117 Cours Gambetta,
F-69003 Lyon(FR)
Inventeur: Fraissenet, Bruno, 37 rue Imbert Colomes,
F-69001 Lyon(FR)

(74) Mandataire: Moncheny, Michel et al, c/o Cabinet
Lavoix 2 Place d'Estienne d'Orves, F-75441 Paris
Cedex 09(FR)

ACTORUM AG

## Description

L'invention concerne une procédé de chemisage à distance d'un tube de générateur de vapeur d'un réacteur nucléaire à eau sous pression ainsi que le dispositif pour la mise en oeuvre de ce procédé de chemisage.

Les générateurs de vapeur des réacteurs nucléaires à eau sous pression comportent généralement un faisceau constitué d'un très grand nombre de tubes de petit diamètre pliés en U et fixés à chacune de leurs extrémités par sertissage, dans une plaque tubulaire de forte épaisseur. La partie du générateur de vapeur située en dessous de la plaque tubulaire constitue une boîte à eau dans une première partie de laquelle l'eau sous pression venant de la cuve du réacteur est répartie dans les tubes du faisceau et dans une seconde partie de laquelle l'eau ayant circulé dans les tubes est récupérée, pour être renvoyée, par une conduite du circuit primaire du réacteur, dans la cuve renfermant le coeur constitué par les assemblages combustibles assurant l'échauffement de l'eau sous pression. L'eau d'alimentation du générateur de vapeur vient en contact avec la surface extérieure des tubes du faisceau, dans la partie du générateur de vapeur située au-dessus de la plaque tubulaire.

Les parois des tubes du faisceau constituent donc une barrière entre l'eau sous pression constituant le fluide primaire du réacteur et l'eau d'alimentation constituant le fluide secondaire. Le fluide primaire qui vient en contact avec les assemblages combustibles et les structures internes de la cuve du réacteur contient des produits radio-actifs en quantité plus ou moins importante. La vapeur formée dans le générateur de vapeur, par échauffement et vaporisation de l'eau d'alimentation, est envoyée à la turbine as sociée au réacteur nucléaire. Il est donc nécessaire d'éviter toute mise en contact du fluide primaire et du fluide secondaire dont la contamination pourrait avoir des conséquences très néfastes.

Il est donc nécessaire d'éviter au maximum l'apparition de fuites à travers les parois des tubes du faisceau du générateur de vapeur et de réparer le plus vite possible et de façon efficace les tubes du faisceau dont la paroi est percée.

En effet, du fait des contraintes d'origine thermique et mécanique ou de la corrosion subies par les tubes du faisceau, des fissures peuvent prendre naissance dans les parois des tubes du faisceau, aussi bien du côté primaire que du côté secondaire, pendant l'utilisation du générateur de vapeur.

Pour augmenter la durée de vie des générateurs de vapeur et pour amener cette durée de vie à une valeur comparable ou égale à celle des autres parties du réacteur, il est nécessaire d'effectuer des interventions ou réparations sur les tubes du faisceau, pendant les phases d'entretien du réacteur nucléaire.

Une des techniques les plus utilisées jusqu'ici consiste à mettre le ou les tubes défectueux hors service en introduisant et en fixant de façon étanche un bouchon, dans l'extrémité du tube affleurant la plaque tubulaire et dans laquelle pénètre l'eau primaire. Cette technique a pour inconvénient de diminuer la surface d'échange du générateur de vapeur et ce, d'autant plus qu'on aura mis un plus grand nombre de tubes hors service.

On a donc proposé des procédés de réparation des tubes du faisceau d'un générateur de vapeur par chemisage de ces tubes, au niveau du défaut entraînant une perte d'étanchéité. Une chemise tubulaire ou manchon d'un diamètre extérieur un peu inférieur au diamètre intérieur du tube à réparer et d'une longueur suffisante pour recouvrir le défaut est introduite dans le tube, par la face d'entrée de la plaque tubulaire sur laquelle affleurent les extrémités des tubes. Le manchon est lui-même placé dans le tube, à l'intérieur de la plaque tubulaire, de façon à affleurer la face d'entrée de la plaque tubulaire. La chemise est alors fixée à l'intérieur du tube par expansion diamétrale suivie d'une ou plusieurs opérations permettant de réaliser une jonction étanche entre la chemise et le tube de part et d'autre de la zone défectueuse du tube.

En particulier, il est connu de réaliser une expansion diamétrale du manchon dans deux zones voisines de ses extrémités situées pour l'une, dans l'épaisseur de la plaque tubulaire au voisinage de sa face d'entrée et pour l'autre, au-delà de la face de sortie de la plaque tubulaire, de façon que ces deux zones soient situées de part et d'autre de la zone défectueuse du tube à réparer. La jonction étanche du manchon et du tube est assurée par un dudgeonnage du manchon dans chacune des zones ayant subi l'expansion diamétrale.

Toutes ces opérations nécessitent d'intervenir à l'intérieur de la boîte à eau du générateur de vapeur, c'est-à-dire dans une partie de ce générateur qui vient en contact avec l'eau primaire chargée de produits radio-actifs, pendant le fonctionnement du réacteur.

Lorsque ces opérations sont réalisées manuellement, un opérateur doit pénétrer dans la boîte à eau où il se trouve soumis à une forte radioactivité.

Le temps de présence de l'opérateur dans la boîte à eau doit donc être réduit au minimum, si bien qu'il n'est possible d'effectuer qu'une faible partie des tâches nécessaires pour le chemisage d'un tube, par intervention d'un opérateur. Cet opérateur se trouve ensuite indisponible pour la poursuite des opérations de chemisage des tubes à l'intérieur de la boite à eau, sa dose d'irradiations atteignant la limite supérieure admise généralement. Pour effectuer les opérations sur un générateur de vapeur, en particulier dans le cas où plusieurs tubes doivent être chemisés, il est donc nécessaire de disposer d'un grand nombre d'opérateurs compétents et entraînés, ce qui accroît considérablement les frais de personnel pendant les opérations de maintenance du réacteur nucléaire.

On a donc proposé des outillages automatiques par exemple tels que décrits dans le EP-A 0 139 494 pour réaliser au moins partiellement les opérations nécessaires pour le chemisage des tubes d'un générateur de vapeur. De tels outillages qui doivent réaliser la mise en place du manchon dans un tube déterminé du générateur de vapeur, puis son expansion, son dudgeonnage et/ou son soudage de façon entièrement automatique, sont extrêmement complexes et extrêmement encombrants, puisqu'ils doivent comporter tous les moyens nécessaires pour les différentes étapes successives du chemisage et en particulier tous les moyens de motorisation des différents outils utilisés successivement. D'autre part, la capacité d'un tel outillage, en ce qui concerne le nombre de tubes qui peuvent être chemisés successivement sans ressortir l'outillage de la boîte à eau, est malgré tout limitée par le nombre maximal de manchons dont peut être muni l'outillage, au moment de son introduction dans la boîte à eau. On a conçu des dispositifs à barillet renfermant plusieurs manchons qui peuvent être présentés successivement pour leur introduction dans les tubes à chemiser. Cependant, la capacité de tels barillets doit être limitée, si l'on veut éviter un encombrement et une complexité trop grands de l'outillage.

Le but de l'invention est donc de proposer un procédé de chemisage à distance d'un tube de générateur de vapeur d'un réacteur nucléaire à eau sous pression, le tube ayant deux extrémités serties dans une plaque tubulaire en-dessous de laquelle le générateur de vapeur constitue une boîte à eau accessible depuis l'extérieur par une ouverture de visite et le procédé comportant, de manière connue, l'introduction d'un manchon par une ouverture de visite de la boîte à eau jusqu'à un endroit situé sous la plaque tubulaire, à la verticale de l'ouverture de visite, le déplacement du manchon à l'intérieur de la boîte à eau jusqu'à une position située à la verticale d'une des extrémités du tube à chemiser, l'introduction du manchon dans le tube, l'expansion diamétrale dans au moins deux zones situées au voisinage de ses extrémités, l'une de ces zones étant dans l'épaisseur de la plaque tubulaire et l'autre au-delà de cette plaque tubulaire et le sertissage par dudgeon du manchon dans chacune des zones d'expansion par commande de moyens moteurs depuis l'extérieur de la boite à l'eau, ce procédé permettant de réaliser le chemisage de façon totalement automatique depuis un poste de travail situé à l'extérieur de la boite à eau, avec un outillage simple et peu encombrant ayant une capacité d'intervention illimitée.

Dans ce but, de façon automatique, avec commande à distance depuis un poste de travail situé à l'extérieur de la boite à eau,

– on introduit un manchon à l'intérieur duquel est placé un expanseur hydraulique dans un tube de chargement à l'extérieur de la boîte à eau, ledit tube de chargement étant relié à un tube flexible passant par l'ouverture de visite de la boite à eau,

– on introduit le manchon dans la boîte à eau, à l'intérieur du tube flexible dont l'extrémité opposée à son extrémité reliée au tube de chargement est disposée dans la boîte à eau à la verticale de l'ouverture de visite par déplacement d'un tube souple, relié à l'expanseur hydraulique et comportant des moyens d'alimentation en fluide hydraulique sous pression de l'expanseur,

– qu'on déplace l'extrémité du tube flexible disposée dans la boîte à eau et contenant le manchon, jusqu'à une position située sous la plaque tubulaire, à la verticale d'une des extrémités du tube à chemiser,

– on introduit le manchon dans le tube, par déplacement du tube souple dans le tube flexible,

– on réalise l'expansion diamétrale du manchon à l'intérieur du tube, en alimentant l'expanseur en fluide hydraulique sous pression,

– on réalise le dudgeonnage du manchon dans la zone située en dehors de la plaque tubulaire, par introduction d'un outil de dudgeonnage dans le manchon, par l'intermédiaire du tube flexible, par déplacement à l'intérieur du tube flexible, d'un élément souple tubulaire auquel est fixé l'outil de dudgeonnage,

– et on réalise le dudgeonnage par l'outil de dudgeonnage relié à des moyens moteurs situés à l'extérieur de la boîte à eau par un élément flexible passant dans l'élément tubulaire souple.

L'invention concerne également un dispositif pour la mise en œuvre du procédé de chemisage suivant l'invention, depuis un poste de travail situé à l'extérieur de la boîte à eau.

Afin de bien faire comprendre l'invention, on va maintenant décrire, à titre d'exemple non limitatif, un dispositif de chemisage à distance de tubes de générateur de vapeur d'un réacteur nucléaire à eau sous pression et sa mise en œuvre dans un procédé de chemisage suivant l'invention.

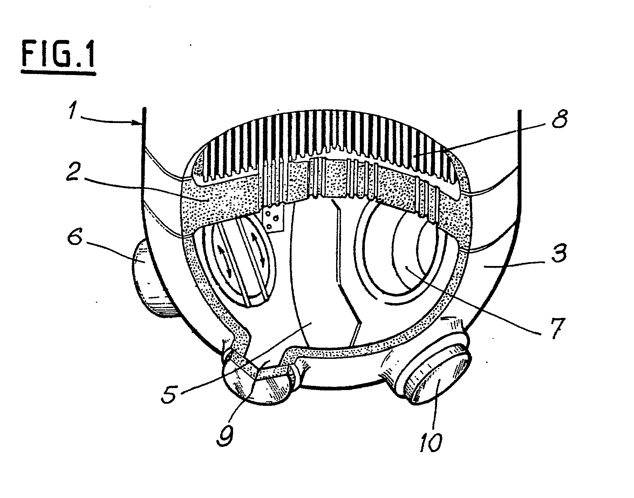

La figure 1 est une vue en perspective avec arrachement de la boîte à eau d'un générateur de vapeur.

La figure 2 est une vue en coupe partielle agrandie d'une partie d'un générateur de vapeur et de deux tubes chemisés de ce générateur de vapeur.

La figure 3a est une vue en coupe agrandie d'un tube du générateur de vapeur, dans une phase intermédiaire d'une opération de chemisage.

La figure 3b est une vue en coupe agrandie d'un tube du générateur de vapeur, à l'issue d'une opération de chemisage.

La figure 4 est une vue schématique générale de l'outillage utilisé lors de l'introduction d'un manchon de chemisage dans la boîte à eau d'un générateur de vapeur.

La figure 5 est une vue suivant V de la figure 4.

La figure 6 est une vue schématique générale de l'outillage utilisé lors des phases d'introduction et d'expansion d'un manchon de chemisage dans un tube de générateur de vapeur.

La figure 7 est une vue en coupe d'un dispositif de guidage et d'introduction d'outillage dans un tube de générateur de vapeur sur lequel on effectue un chemisage.

La figure 8 est une vue en coupe par un plan vertical d'une boîte de chargement faisant partie de l'outillage représenté sur les figures 4 et 6.

La figure 9 est une vue suivant IX-IX de la figure 8.

La figure 10 est une vue en coupe d'un dispositif d'expansion diamétrale d'un manchon de chemisage.

La figure 11 est une vue schématique générale de l'outillage utilisé pour le dudgeonnage d'un manchon de chemisage dans la zone située en dehors de la plaque tubulaire, lors de son introduction dans la boîte à eau d'un générateur de vapeur.

La figure 12 est une vue schématique générale de l'outillage de dudgeonnage représenté sur la figure 11, lors de son introduction dans un tube du générateur de vapeur en cours de chemisage.

La figure 13 est une vue en perspective détaillée de l'ensemble de motorisation du dispositif de dudgeonnage représenté sur les figuers 11 et 12.

La figure 14 est une vue en coupe schématique de l'ensemble de l'outil de dudgeonnage.

La figure 15 est une vue en coupe détaillée de la partie d'extrémité de l'outil de dudgeonnage représenté sur la figure 14.

Sur la fgure 1, on voit un générateur de vapeur 1 comportant une plaque tubulaire 2 de forte épaisseur sous laquelle est fixée la partie inférieure du générateur de vapeur constituant une boîte à eau 3. La boîte à eau 3 de forme hémisphérique est séparée en deux parties par une cloison 5. L'eau sous pression à haute température du réacteur nucléaire pénètre dans une des parties de la boîte à eau par une tubulure 6 puis circule dans les tubes 8 du faisceau du générateur de vapeur, d'abord de bas en haut puis de haut en bas pour ressortir dans la seconde partie de la boîte à eau dans laquelle débouche une tubulure 7 reliée au circuit primaire du réacteur nucléaire, pour le retour de l'eau sous pression à la cuve du réacteur.

Chacune des parties de la boîte à eau 3 est munie d'une ouverture de visite 9 qui peut être fermée par une tape 10.

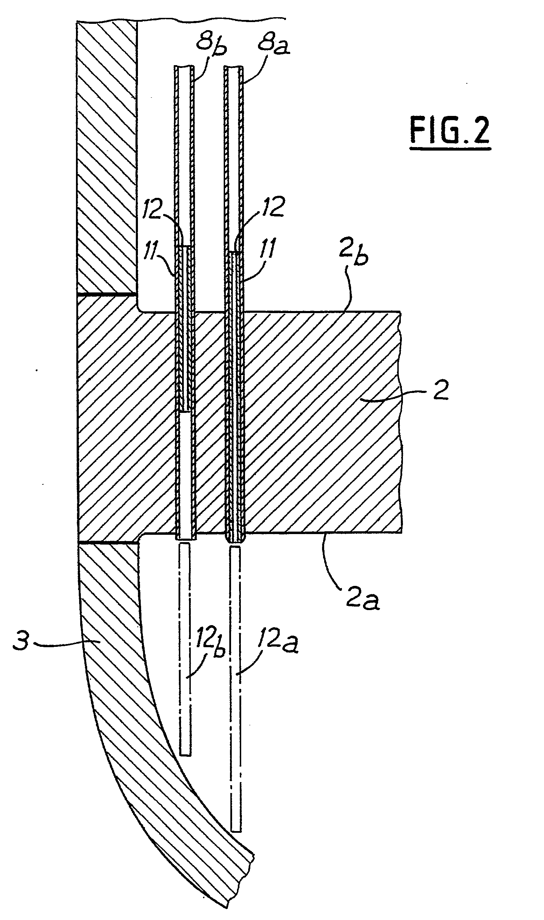

Sur la figure 2, on voit une partie de la plaque tubulaire 2 du générateur de vapeur traversée par les extrémités de deux tubes 8a et 8b sertis par dudgeonnage à l'intérieur de trous traversant la plaque tubulaire. Les tubes 8a et 8b sont soit très légèrement saillants soit à ras par rapport à la face inférieure 2a ou face d'entrée de la plaque tubulaire 2. Les tubes 8a et 8b traversent la face de sortie 2b de la plaque tubulaire pour pénétrer dans la partie supérieure du générateur de vapeur recevant l'eau d'alimentation qui est échauffée et vaporisée par l'eau sous pression circulant dans les tube 8. La zone des tubes voisine de la face de sortie 2b de la plaque tubulaire qui correspond à la zone de transition entre la partie déformée par dudgeonnage et la partie non déformée des tubes est généralement la partie du tube la plus exposée à la fissuration, en particulier sous l'effet de la corrosion. Pour réparer les tubes fissurés dans la zone 11 voisine de la face de sortie 2b de la plaque tubulaire, on peut réaliser un chemisage en introduisant et en fixant dans le tube fissuré un manchon 12 recouvrant la zone 11 dans laquelle le tube est fissuré.

Sur la figure 2, on a représenté deux types de manchon 12a et 12b permettant d'effectuer la réparation des tubes 8a et 8b respectivement. Le manchon 12a dont la longueur est supérieure à l'épaisseur de la plaque tubulaire 2 peut être introduit, depuis la face d'entrée 2a de la plaque tubulaire, dans un tube quelconque dont il est nécessaire d'effectuer la réparation, de façon que l'extrémité inférieure du manchon soit située au niveau de l'extrémité d'entrée du tube 8. La partie supérieure du manchon recouvre alors la zone 11 dans laquelle le tube 8a est fissuré.

Toutefois, dans le cas des tubes périphériques tels que le tube 8b, il s'avère impossible d'introduire dans ce tube un manchon d'une longueur supérieure à l'épaisseur de la plaque tubulaire, en raison de la forme hémisphérique de la boîte à eau 3. Il est alors possible d'utiliser un manchon court 12b dont la longueur est nettement inférieure à l'épaisseur de la plaque tubulaire. Ce manchon 12b est placé à l'intérieur du tube 8b de façon à recouvrir la zone fissurée 11. Son extrémité inférieure est alors à l'intérieur de la plaque tubulaire et non au niveau de la face d'entrée 2a de cette plaque tubulaire.

Ce nouveau procédé de chemisage des tubes périphériques d'un générateur de vapeur fait l'objet d'une demande de brevet de la Société FRAMATOME déposée le même jour que la présente demande.

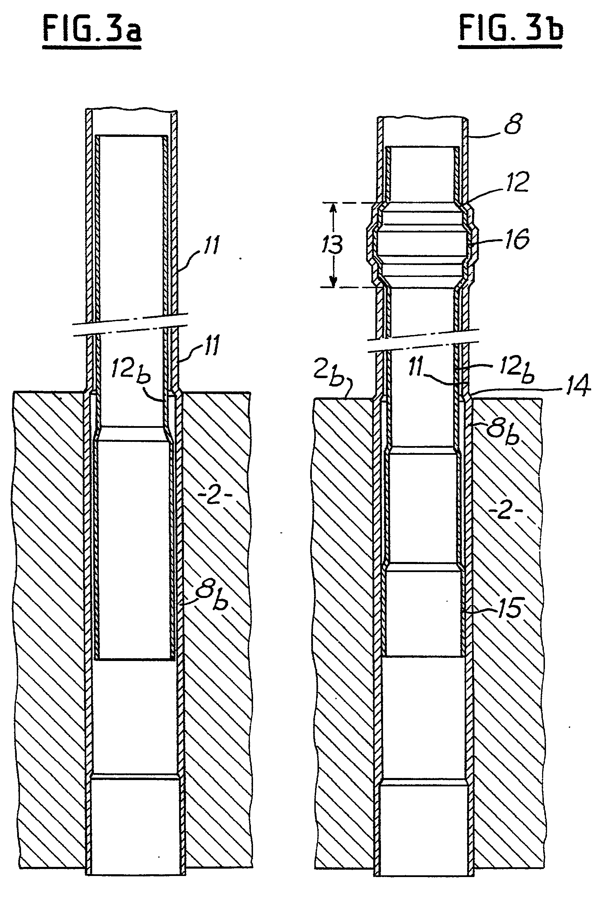

Sur les figures 3a et 3b, on a représenté un tube périphérique 8b en cours de chemisage et après l'opération de chemisage respectivement, en utilisant un manchon court 12b.

Sur la figure 3a, le manchon 12b introduit dans le tube 8b a subi une expansion diamètrale dans sa partie inférieure située dans la partie du tube 8b dudgeonnée à l'intérieur de la plaque tubulaire 2. Cette phase intermédiaire du chemisage est suivie d'une phase au cours de laquelle on réalise l'expansion diamètrale du manchon 12 dans une zone 13 située au-dessus de la zone de transition 11 dans laquelle une fissure 14 a été décelée. Cette expansion diamètrale est effectuée dans une zone se trouvant au-delà de la face de sortie 2b de la plaque tubulaire, c'est-à-dire en dehors de la zone du tube 8 sertie dans la plaque tubulaire 2.

Le manchon 12b est ensuite dudgeonné à l'intérieur du tube 8 dans sa zone d'extrémité 15 située à l'intérieur de la partie sertie du tube 8.

Enfin, le manchon 12 est également dudgeonné à l'intérieur du tube 8 dans une zone 16 située dans la zone d'expansion diamètrale 13.

Les dudgeonnages effectués dans les zones 15 et 16 à l'intérieur des zones du manchon 12 ayant subi préalablement une expansion radiale permettent d'assurer une jonction étanche entre le manchon 12 et le tube 8 de part et d'autre de la zone 11 comportant une fissure 14. Le tube 8 peut alors assurer de nouveau la séparation du fluide primaire et du fluide secondaire, après la mise en fonctionnement du générateur de vapeur.

L'étanchéité des zones dudgeonnées 15 et 16 peut être améliorée par brasure ou soudure.

Les opérations qui viennent d'être décrites sont connues de la technique antérieure et nécessitent pour leur mise en oeuvre, l'intervention d'un opérateur dans la boîte à eau du générateur de vapeur ou l'utilisation d'un dispositif semi-automatique, complexe et encombrant et d'une capacité limitée.

L'objet de l'invention est de proposer un procédé et un dispositif permettant de remédier à ces inconvénients.

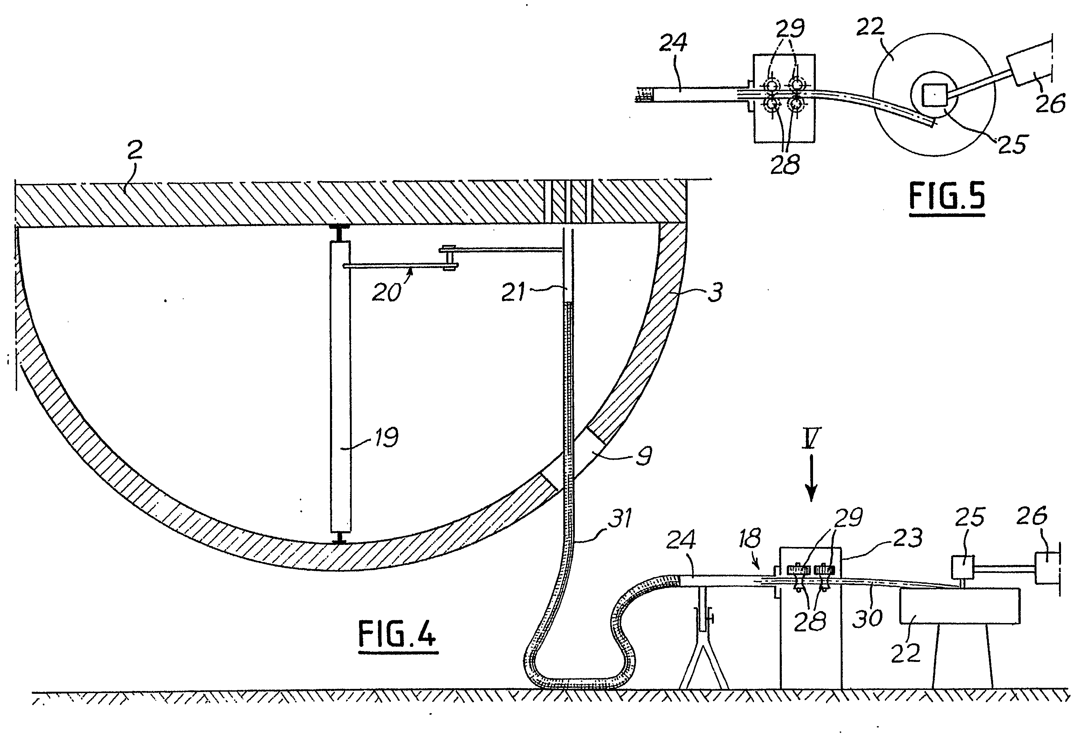

Sur les figures 4, 5 et 6, on voit l'ensemble des moyens nécessaires pour effectuer l'introduction d'un manchon dans la boîte à eau 3, depuis un poste de travail 18 situé à l'extérieur de cette boîte à eau, puis la mise en place du manchon dans un tube à réparer et enfin l'expansion diamètrale du manchon dans deux zones voisines de ses extrémités, comme représenté sur les figue 3a et 3b.

Sur la figure 4, les éléments du dispositif sont dans leur position permettant l'introduction du manchon dans la boîte à eau.

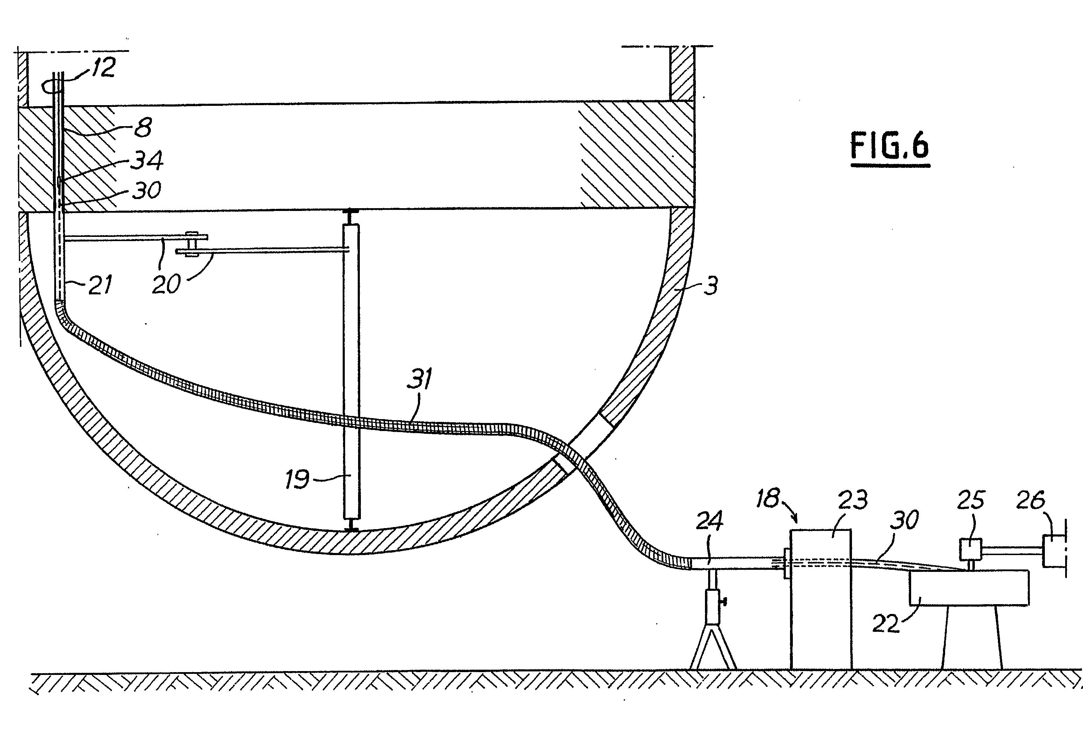

Sur la figure 6, les éléments correspondants sont dans leur position permettant l'introduction du manchon dans le tube à réparer et son expansion hydraulique.

Les opérations de chemisage des tubes du générateur de vapeur sont effectuées sur le générateur de vapeur à l'arrêt, vide d'eau et refroidi, une au moins des ouvertures de visite 9 étant ouverte pour permettre l'introduction d'outillages à l'intérieur de la boîte à eau.

Préalablement aux opérations de chemisage proprement dites, on a introduit et monté dans la boîte à eau 3, un dispositif de manutention 19 bien connu de l'art antérieur et comportant un bras en deux parties articulées 20 permettant de mettre un outillage en position, sous la plaque tubulaire 2, exactement à la verticale de l'extrémité d'un tube quelconque du faisceau.

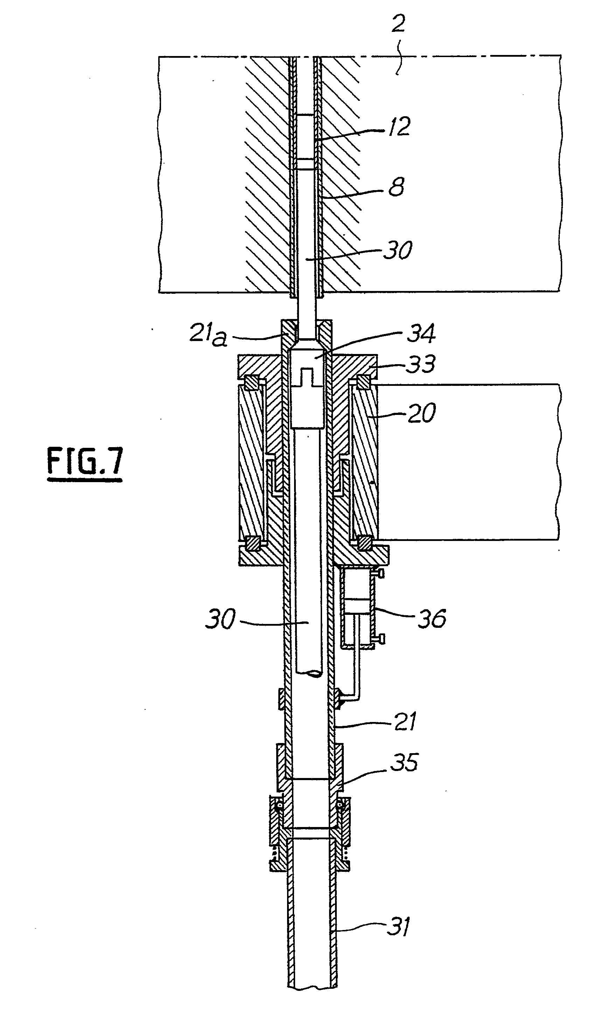

Pour la mise en oeuvre de l'invention, on a fixé à l'extrémité du bras 20, en position verticale, un dispositif de guidage et d'introduction 21, de forme générale tubulaire qui sera décrit plus en détail en se référant à la figure 7.

Sur la figure 4, la position du bras 20 du dispositif de manutention 19 est telle que l'élément tubulaire de guidage 21 se trouve à la verticale d'une ouverture de visite 10 de la boîte à eau 3. Dans cette position, on peut réaliser l'introduction d'un manchon de chemisage dans la boîte à eau.

Les éléments du dispositif situés au poste de travail 18 à l'extérieur de la boîte à eau comportent un enrouleur-dérouleur 22, un tireur-pousseur 23 et un tube de chargement 24. Un raccord tournant 25 relié à une source de fluide sous haute pression 26 est associé à l'enrouleur-dérouleur 22, pour l'alimentation en fluide à haute pression d'un tube souple dont l'enrouleur-dérouleur 22 assure la manutention.

Comme il est visible sur les figures 4 et 5, le tireur-pousseur 23 comporte des galets 28 solidaires d'engrenages 29 entraînés par un moyen moteur non représenté. Un élément tubulaire souple 30 stocké dans l'enrouleur-dérouleur 22 et relié à la source de pression 26 par le raccord 25 passe entre les galets d'entraînement 28 du tireur-pousseur qui peut assurer son déplacement dans un sens ou dans l'autre. Le tube de chargement 24 est fixé à la sortie du tireur-pousseur par une de ses extrémités et relié, par son autre extrémité, à un tube flexible 31 assurant la jonction entre la sortie du tube de chargement 24 et l'élément tubulaire de guidage et d'introduction 21 à l'intérieur de la boîte à eau. Ce tube flexible 31, d'une longueur voisine de 5 mètres, permet de placer le poste de travail 18 totalement en dehors de la zone exposée aux radiations de la boîte à eau 3. Ce tube 31 sera constitué de préférence par un tube en acier inoxydable présentant des ondes successives sur toute sa longueur et entouré d'une tresse protectrice en fils d'acier inoxydable.

Sur la figure 7, on voit l'élément tubulaire de guidage 21 relié à l'extrémité du bras 20 par l'intermédiaire d'un manchon 33 dans lequel l'élément tubulaire 21 est monté coulissant. Un vérin à double effet 36 dont le corps est fixé sur le manchon 33 et dont la tige est reliée à l'élément tubulaire 21 permet de déplacer cet élément 21 dans un sens ou dans l'autre ou de le maintenir en position.

A son extrémité supérieure 21a, l'élément tubulaire 21 présente un diamètre intérieur plus faible que dans sa partie courante et constitue un profil rentrant lui permettant d'exercer une traction sur l'expanseur hydraulique 34 relié à l'extrémité de l'élément tubulaire souple 30, lorsque celui-ci est engagé avec le manchon 12 dans un tube 8 dont on effectue la réparation. Le vérin à double effet 36 permet ainsi d'exercer une traction sur l'expanseur, à la fin de la phase d'expansion hydraulique du manchon, comme il sera expliqué plus loin. Le vérin à double effet 36 permet également, après positionnement du bras 20 à la verticale d'un tube 8, d'amener l'extrémité supérieure de l'élément de guidage tubulaire 21 à proximité immédiate de l'extrémité saillante du tube 8 ou même en engagement avec celle-ci, lorsque le tube 8 est dépas sant de la plaque tubulaire, l'extrémité supérieure de l'élément tubulaire 21 étant évasée.

L'extrémité inférieure de l'élément tubulaire 21 est reliée par un raccord tournant à bille 35 au tube flexible 31, de telle façon que le tube 31 puisse tourner par rapport à l'élément tubulaire de guidage 21.

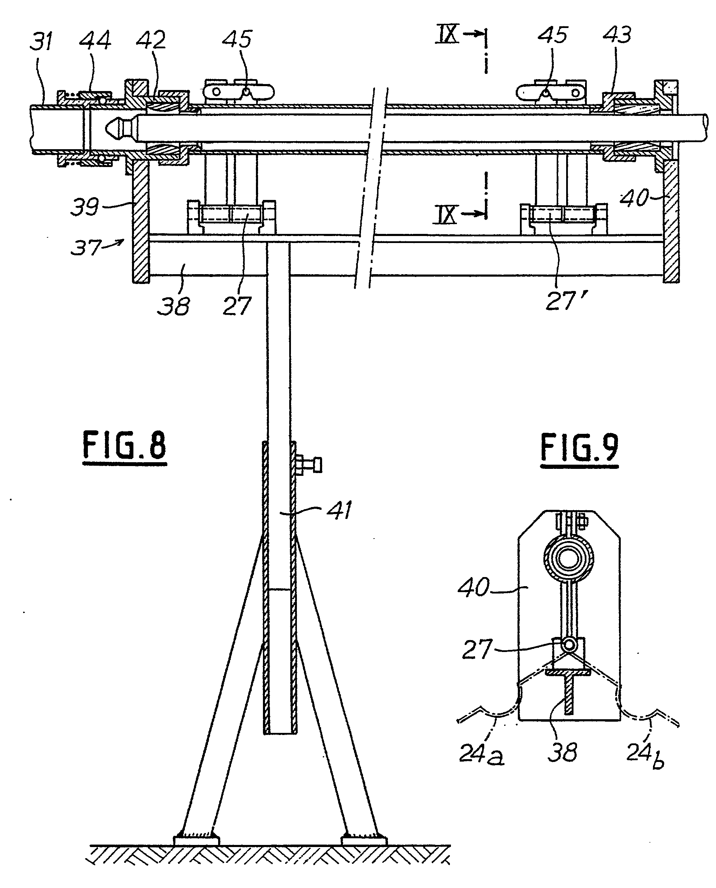

Sur la figure 8, on voit que le tube de chargement 24 est monté sur une structure de support 37 comportant un longeron 38 constitué par un profilé en T, deux flasques 39 et 40 fixés aux extrémités du longeron 38 et un trépied réglable de support 41. Le tube 24 lui-même est constitué de deux demi-couvercles 24a et 24b montés articulés autour d'axes 27 et 27', sur le support 37. Les deux demi-couvercles 24a et 24b ont été représentés sur la figure 9, en traits pleins dans leur position fermée et en pointillés dans leur position d'ouverture. Dans leur position fermée, les deux demi-couvercles constituent un tube continu et fermé raccordé à ses extrémités à des pièces de jonction 42 et 43 solidaires des flasques 39 et 40 respectivement. La pièce de raccordement 42 permet de relier l'extrémité du tube flexible 31 à la sortie du tube de chargement 24, grâce à un raccord à encliquetage rapide 44 muni d'un moyen de verrouillage et d'un ensemble à billes permettant au tube flexible 31 de tourner par rapport au tube de chargement 24. Le tube flexible est donc fixé à l'une de ses extrémités à l'élément tubulaire de guidage 21 à l'intérieur de la boîte à eau 3 et à son autre extrémité au tube de chargement 24, à l'extérieur de la boîte à eau ; les deux extrémités du tube sont d'autre part montées librement rotatives sur les pièces auxquelles elles sont reliées.

La pièce de raccordement 43 assure la jonction entre le tube de chargement 24 et le tireur-pousseur 23, de façon que l'élément tubulaire souple 30 venant de l'enrouleur-dérouleur 22 puisse passer du tireur-pousseur au tube de chargement, sans discontinuité de guidage.

Deux dispositifs de verrouillage rapide 45 permettent de verrouiller les deux demi-couvercles 24a et 24b en position fermée. Un interrupteur de sécurité interdit le fonctionnement du tireur-pousseur, lorsque les demi-couvercles 24a et 24b sont en position ouverte.

Un détecteur d'effort non représenté est placé entre le tube de chargement 24 et le raccord rapide 44 pour assurer un arrêt automatique du tireur-pousseur, dans le cas d'un dépassement d'une certaine valeur prédéterminée, par l'effort mesuré.

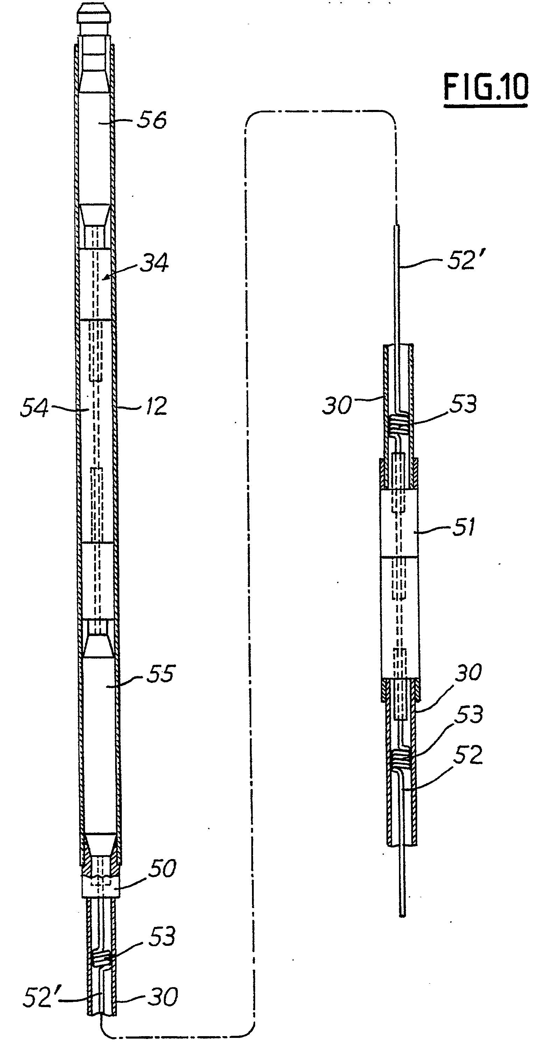

Sur la figure 10, on voit un manchon 12 utilisable pour le chemisage d'un tube de générateur de vapeur à l'intérieur duquel a été introduit un expanseur hydraulique 34 relié à l'une de ses extrémités, grâce à un raccord fixe 50, à une portion de tube souple analogue au tube 30 stocké dans l'enrouleur 22 et déplacée par le tireur-pousseur 23, cette portion de tube souple étant elle-même reliée par l'intermédiaire d'un raccord amovible 51 en deux parties, à l'extrémité du tube souple 30. Une des parties du raccord amovible rapide 51 est fixée pour cela à l'extrémité du tube souple 30 et l'autre partie à l'extrémité du tronçon intermédiaire fixé à l'expanseur.

Le raccord 50 comporte un épaulement sur lequel vient en butée la manchette 12 au moment de son introduction sur le mandrin d'expansion. Le raccord 51 comporte un épaulement qui vient s'appuyer sur la face inférieure de la plaque tubulaire (cas des manchettes courtes) et qui positionne ainsi la manchette à la hauteur désirée dans le tube 8.

A l'intérieur du tube 30 est disposé un tube capillaire 52 dont une extrémité est fixée dans la partie du raccord rapide 51 solidaire du tube 30 et dont l'autre extrémité est reliée au raccord tournant 25 de l'enrouleur 22. Un tube capillaire identique 52' est fixé dans le tronçon souple de raccordement entre l'expanseur 34 et le raccord 51. Une des extrémités de ce tube capillaire 52' et reliée à l'expanseur 34 par l'intermédiaire du raccord fixe 50 et l'autre extrémité de ce capillaire 52' est reliée à la partie du raccord rapide amovible 51 relié au tronçon souple de jonction. L'encliquetage du raccord rapide 51 permet de réaliser la jonction entre les capillaires 52 et 52'. On peut ainsi assurer, par l'intermédiaire de ce tube capillaire, l'alimentation en fluide hydraulique sous pression de l'expanseur 34, à partir de la source de fluide hydraulique sous pression 26.

Les tubes capillaires 52 et 52' comportent des parties 53 enroulées en hélice permettant d'obtenir une certaine souplesse du capillaire, pendant les déplacements du tube souple 30, du manchon 12 et de l'expanseur 34, à l'intérieur du tube flexible 31.

L'expanseur 34 comporte une chambre d'expansion inférieure 55, une chambre d'expansion supérieure 56 et un corps central 54 percé d'un canal axial permettant la jonction entre les chambres d'expansion 55 et 56. La chambre d'expansion inférieure 55 communique avec l'extrémité du capillaire 52' pour son alimentation en fluide sous pression. La chambre d'expansion supérieure 56 est alimentée en fluide sous pression venant de la chambre 55, par l'intermédiaire du canal du corps central 54 de l'expanseur.

L'admission de fluide sous pression dans les chambres d'expansion 55 et 56 permet de dilater leur enveloppe dans la direction radiale et de transmettre cette déformation radiale au manchon 12, lorsque ce manchon a été introduit dans le tube 8 à chemiser.

On va se reporter aux figures 4 et 6 pour décrire le fonctionnement du dispositif pendant les phases d'introduction et d'expansion d'un manchon de chemisage dans un tube du générateur de vapeur.

A l'instant initial, le bras 20 et le dispositif de guidage et d'introduction 21 sont dans la position représentée sur la figure 4. Un opérateur placé au poste de travail 18 ouvre le tube de chargement 24 en écartant les deux demi-couvercles 24a et 24b après avoir assuré le déverrouillage des dispositifs 45.

Un manchon de chemisage 12 à l'intérieur duquel a été introduit un expanseur 34 relié à un tronçon de jonction souple, comme représenté sur la figure 10 est alors introduit dans le tube de chargement ouvert. Le tronçon de jonction souple est relié à l'extrémité du tube souple 30 par l'intermédiaire du raccord amovible rapide 51.

On effectue alors la fermeture et le verrouillage du tube de chargement 24, puis on provoque le démarrage du tireur-pousseur 23, dans le sens de la poussée, pour déplacer le tube souple 30 portant à son extrémité le manchon 12 et l'expanseur hydraulique 34, d'abord dans le tube de chargement 12 puis dans le tube flexible 31, jusqu'au moment où le manchon 12 est introduit dans l'élément tubulaire de guidage et d'introduction 21.

La longueur de tube souple déplacée par le tireur-pousseur est contrôlée par comptage du nombre de tours de rotation d'un galet de mesure en contact avec le tube souple dans le tireur-pousseur 23 et au moyen de détecteurs de présence placés dans la pièce 21.

L'élément tubulaire de guidage et d'introduction 21 est alors amené dans sa position représentée sur la figure 6, à la verticale du tube 8 dont on veut effectuer le chemisage. Lors du déplacement de l'élément tubulaire 1 depuis sa position représentée sur la figure 4 jusqu'à sa position représentée sur la figure 6, le tube flexible 31, l'élément souple tubulaire 30 et le capillaire se déforment pour suivre le mouvement de l'élément de guidage 21.

Lorsque l'élément de guidage 21 est en position à la verticale du tube 8, le vérin à double effet 36 de déplacement vertical de l'élément tubulaire de guidage 21 est alimenté dans le sens de la montée de l'élément 21. jusqu'au moment où celui-ci vient accoster l'extrémité du tube 8. Le tireur-pousseur 23 est alors remis en fonctionnement jusqu'au moment où le manchon 12 est parvenu dans sa position définitive à l'intérieur du tube 8. Cette position peut être contrôlée, par mesure du déplacement de l'élément souple 30 au niveau du tireur-pousseur, par des détecteurs placés dans la pièce 21, par la mesure de l'effort de poussée d'un détecteur d'effort placé entre le tube 24 et le raccord 44, et par une caméra de surveillance de l'introduction située sur l'outillage 21.

On envoie alors le fluide hydraulique sous pression dans le capillaire 52-52', à partir de la source 26, afin d'alimenter l'expanseur hydraulique 34. Les chambres d'expansion 55 et 56 se dilatent et réalisent une expansion diamètrale du manchon 12 à l'intérieur du tube 8, jusqu'au moment où la paroi externe du manchon 12 vient au contact de la surface in terne du tube 8. On relâche alors la pression dans le capillaire et dans l'expanseur et l'on réalise l'extraction de l'expanseur en alimentant le vérin à double effet 36 de l'élément tubulaire de guidage 21 dans le sens de la descente. En effet, il peut être nécessaire d'exercer une certaine traction sur l'expanseur pour l'extraire du manchon 12 et du tube 8, les parois des chambres d'expansion 55 et 56 gardant une certaine déformation rémanente après relâchement de la pression du fluide hydraulique.

Le tireur-pousseur est alors mis en fonctionnement dans le sens de la traction et l'expanseur et réintroduit dans la pièce 21. L'élément 21 est ensuite ramené à la verticale de l'ouverture de visite 10. L'expanseur peut alors être récupéré à l'extrémité du tube souple 30, dans le tube de chargement 24 après ouverture de ce tube.

L'élément tubulaire souple 30 et généralement un tube de matière plastique et de préférence un tube en Rilsan qui possède à la fois des caractéristiques suffisantes de souplesse et de résistance, pour assurer le déplacement dans le tube flexible 31 et la poussée sur le manchon et l'expanseur.

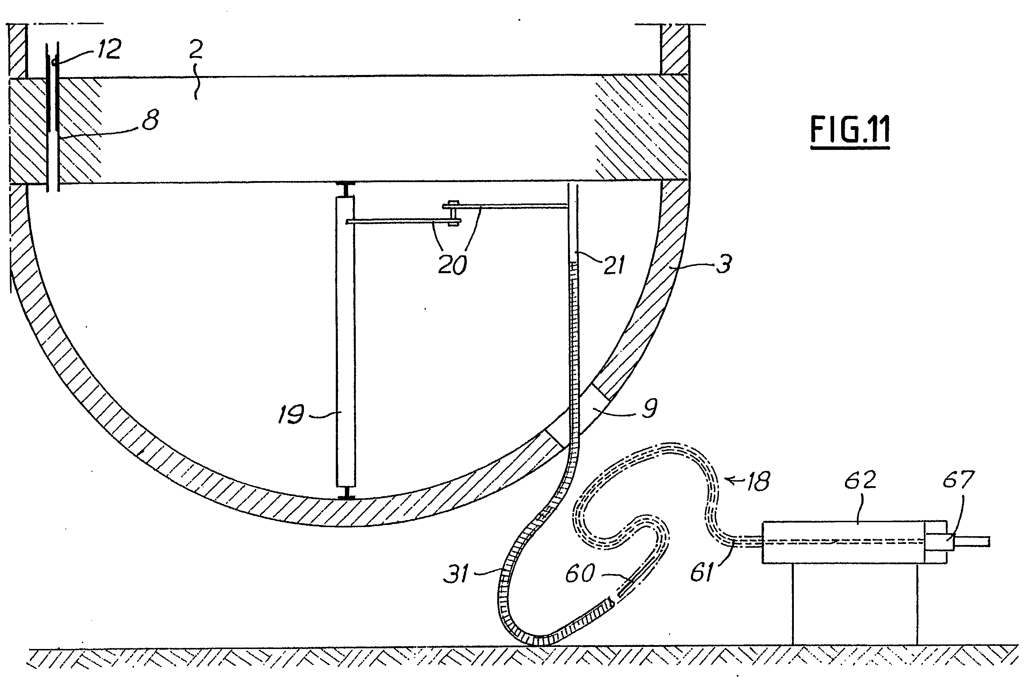

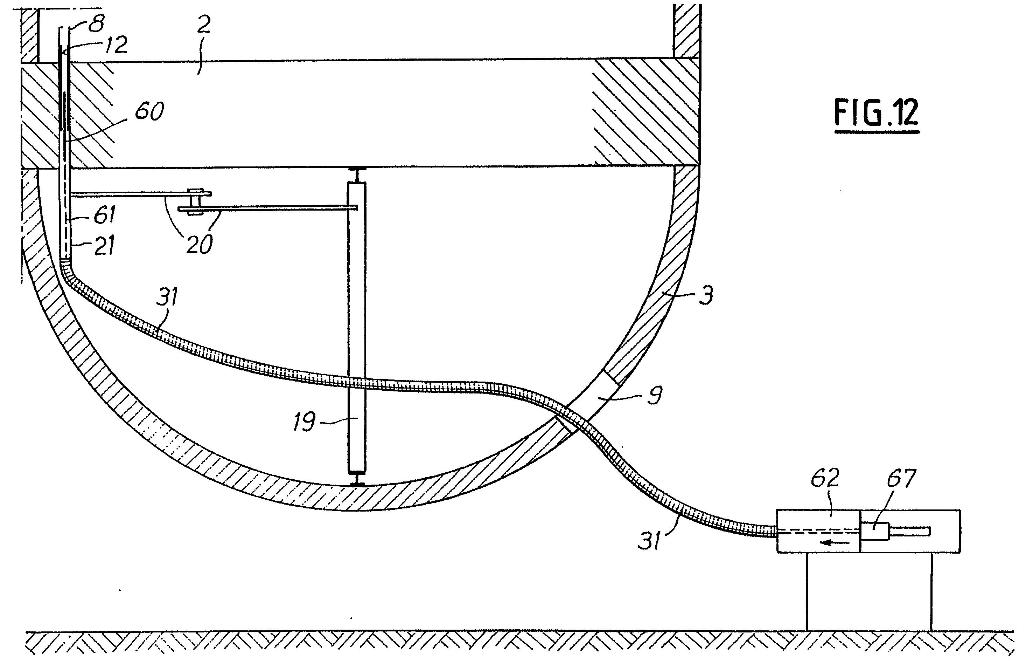

Sur les figures 11 et 12, on a représenté l'ensemble du dispositif nécessaire pour la mise en oeuvre de la phase suivante du procédé de chemisage, à savoir le dudgeonnage de la partie supérieure du manchon, dans la zone du tube 8 située à l'extérieur de la plaque tubulaire 2.

Sur la figure 11, l'appareillage a été représenté dans la phase d'introduction de l'outillage de dudgeonnage à l'intérieur de la boîte à eau et sur la figure 12 l'appareillage à été représenté pendant la phase d'introduction de l'outillage de dudgeonnage dans le tube en cours de chemisage.

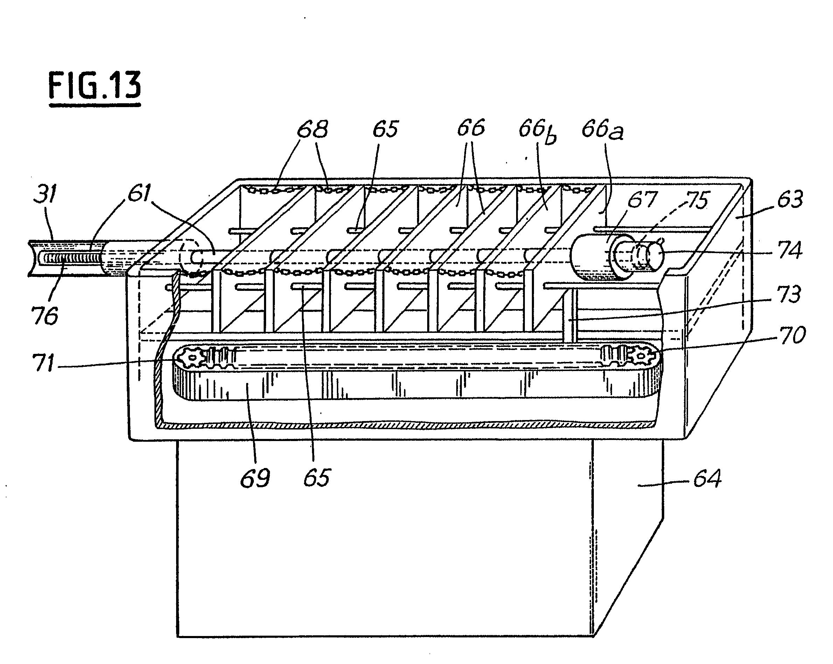

Les éléments de l'appareillage disposés dans la boîte à eau sont identiques à ceux utilisés dans les phases précédentes et représentés sur les figures 4 et 6. De la même façon, le tube flexible 31 relié à l'élément tubulaire de guidage 21 est également utilisé et son extrémité se trouve à l'extérieur de la boîte à eau, au voisinage du poste de travail 18. Cette extrémité est maintenant totalement libre dans la phase initiale représntée sur la figure 11, pour l'introduction manuelle de l'outil de dudgeonnage 60 dans cette extrémité du tube flexible 31. L'outil de dudgeonnage 60 est relié à un élément tubulaire souple 61 comparable à l'élément tubulaire 30 et qui peut être également contitué par un tube de Rilsan. L'élément tubulaire 61 est relié aux éléments mobiles d'un dispositif d'introduction 62 dans lequel se trouve également placée la dudgeonneuse et qui sera décrit plus en détail en se référant à la figure 13.

Le dispositif d'introduction comporte un carter parallèlépipèdique 63 reposant sur le sol au poste de travail par l'intermédiaire d'un socle 64. Des barres de guidage 65 sont fixées à l'intérieur du carter 63, suivant sa direction longitudinale et des plaquettes de guidage de forme rectangulaire 66 sont montées glissantes sur les barres 65 et à l'intérieur du carter 63, dans la direction longitudinale du carter.

L'élément tubulaire souple 61 traverse chacune des plaquettes 66 dans sa zone centrale, de façon à être monté glissant dans ces plaquettes. La plaquette d'extrémité 66a porte la dudgeonneuse 67 sur laquelle est montée de façon rigide l'extrémité du tube souple 61. Les plaquettes 66 sont reliées entre elles à chacune de leurs extrémités supérieures et à l'extrémité du carter opposé à la dudgeonneuse, par un ensemble de chaînettes 68.

Une courroie 69 présentant un crantage intérieur est montée dans le carter 63, sur deux pignons d'entraînement et de renvoi 70 et 71 respectivement. Le pignon d'entraînement 70 est relié à un moteur d'entraînement non représenté.

La plaquette d'extrémité 66a est reliée par l'intermédiaire d'une barre d'accouplement 73 à la courroie 69.

On comprend ainsi que la dudgeonneuse 67 et le tube souple 61 sont entraînés dans un mouvement longitudinal lorsque le moteur d'entraînement de la courroie 69 est mis en fonctionnement. Le mouvement longitudinal peut être réalisé par un système vis-écrou en lieu et place de la courroie.

Lorsque le mouvement se produit dans le sens de l'avancée, c'est-à-dire de droite à gauche sur la figure 13, la plaque 66a entraîne la dudgeonneuse 67 et le tube 61 jusqu'au moment où la plaquette 66a vient en contact avec la seconde plaquette 66b dont elle effectue l'entraînement ; de proche en proche, le tube souple 61 est ainsi entraîné tout en étant guidé et maintenu rigide par les plaquettes 66.

Lorsque le mouvement se produit dans le sens de l'extraction, c'est-à-dire de la gauche vers la droite sur la figure 13, les plaquettes 66 reprennent leur position représentée sur la figure grâce aux chaînettes 68.

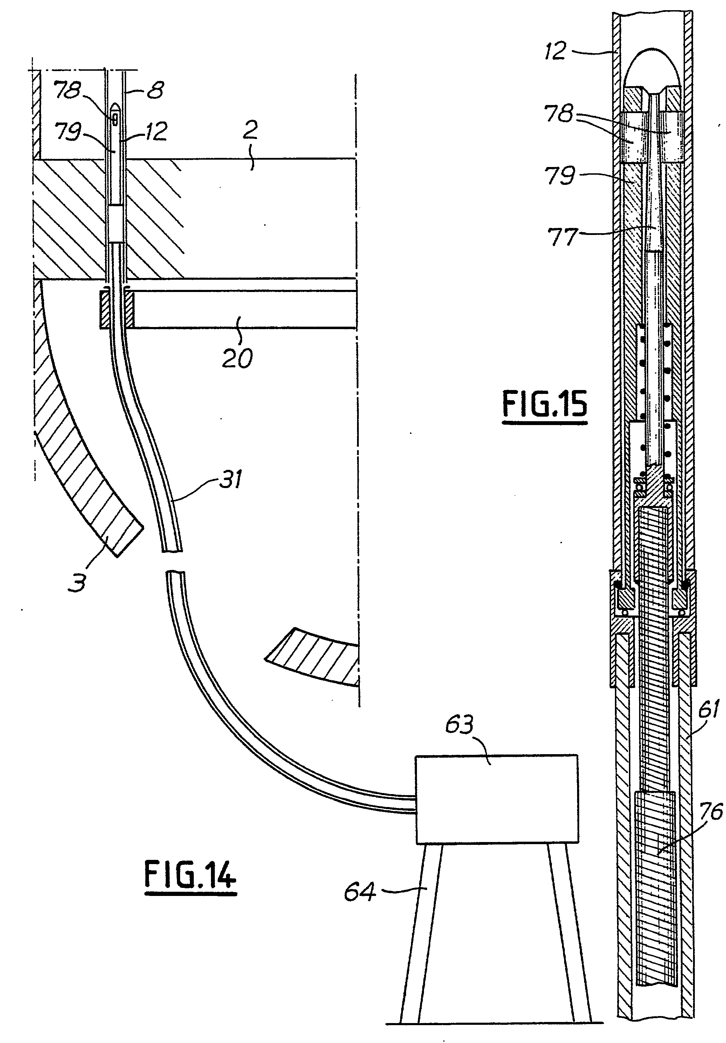

Comme il est visible sur les figures 13, 14 et 15, la dudgeonneuse comporte un vérin à double effet 74 comportant un piston d'avance et de recul 75 relié par l'intermédiaire d'un flexible 76 à l'aiguille 77 du dudgeon représenté sur la figure 15. La dudgeonneuse 67 comporte également un moteur permettant de mettre en rotation le flexible 76 et l'aiguille 77 pour transmettre le mouvement de rotation aux galets 78 du dudgeon 79. Le dudgeon 79 est lui-même fixé, à sa partie inférieure, au tube souple 61 dans lequel passe le flexible 76. Dans sa position de travail, le dudgeon, comme représenté sur la figure 15 vient en butée par sa partie inférieure sur l'extrémité inférieure du manchon 12 ayant subi préalablement une expansion diamètrale comme il a été décrit ci-dessus.

L'aiguille 77 introduite à la partie centrale du dudgeon 79 est de forme tronconique et vient en appui sur les galets 78, d'une part pour les entraîner en rotation et d'autre part pour les pousser vers l'extérieur, afin de réaliser le dudgeonnage. Pour cela, l'aiguille 77 peut être entraînée en rotation par le flexible 76 et simultanément poussée vers le haut grâce à l'action du vérin 74.

En se reportant aux figures 11 et 12, on va maintenant décrire une opération de dudgeonnage de la partie supérieure d'un manchon 12 placé à l'intérieur d'un tube 8 et ayant subi préalablement une expansion radiale dans ses deux zones d'extrémité, comme il a été décrit ci-dessus.

Le dudgeonnage est effectué dans la zone d'expansion supérieure du manchon 12, c'est-à-dire dans la zone du tube 8 se trouvant au-dessus de la plaque tubulaire 2.

A l'instant initial, comme représenté sur la figure 11, le bras 20 du dispositif de manutention 19 est dans une position où l'élément tubulaire de guidage 21 est à la verticale de l'ouverture de visite 9 de la boîte à eau 3. Le tube flexible 31 a son extrémité à l'extérieur de la boîte à eau, au poste de travail 18.

L'opérateur introduit alors l'ensemble de l'outil de dudgeonnage 60 comportant le corps de dudgeon 79, les galets 78 et l'aiguille 77, à l'intérieur du tube flexible 31. L'introduction de l'outillage 60 jusqu'à l'élément de guidage 21 est manuelle et sa réalisation est contrôlée par la longueur de tube souple 61 introduite dans le tube flexible 31.

Lorsque l'introduction de l'outil de dudgeonnage 60 dans l'élément tubulaire de guidage 21 a été réalisée, on relie l'extrémité du tube flexible 31 opposée à l'élément de guidage 21 à l'extrémité du carter 63 de la machine d'introduction 62. On met alors en place l'élément tubulaire de guidage 21 à la verticale du tube 8 dans lequel se trouve le manchon 12 à dudgeonner, par rotation du bras 20. La nouvelle position du bras 20, du flexible 31 et de l'élément de guidage 21 est représentée sur la figure 12.

On réalise alors l'introduction de l'outil de dudgeonnage 60 dans le manchon 12 grâce à la machine d'introduction 62, comme il a été expliqué plus haut.

On contrôle de façon très précise la position de l'outil de dudgeonnage dans le manchon 12 et l'on met la dudgeonneuse 67 en fonctionnement, la rotation de l'aiguille 77 et la poussée transmise par cette aiguille permettant de réaliser un laminage et un sertissage du manchon 12, à l'intérieur du tube 8, dans la zone supérieure préalablement soumise à une expansion diamètrale.

Lorsque le dudgeonnage de la partie supérieure du manchon a été réalisé, on enlève de la boîte à eau l'ensemble du dispositif permettant le dudgeonnage et on effectue le dudgeonnage de la partie inférieure de ce manchon préalablement soumise à une ex pansion diamètrale, par une méthode connue de l'art antérieur, c'est-à-dire avec une machine automatique portée par le bras 20 du dispositif de manutention 19.

En effet, le dudgeonnage de la partie supérieure du manchon à l'intérieur du tube 8 ne met en oeuvre que des contraintes relativement faibles, la paroi du tube 8 subissant une déformation comme il est représenté sur la figure 3b. Au contraire, la zone inférieure du manchon est située dans une partie du tube à l'intérieur de la plaque tubulaire 2, si bien que les contraintes à mettre en oeuvre pour réaliser le sertissage du manchon 12 par laminage de sa paroi sur la paroi du tube sont beaucoup plus élevées ; il n'est donc plus possible de transmettre la rotation et la poussée à l'aiguille du dudgeon par un flexible de grande longueur comme dans le cas du dudgeonnage de la partie supérieure du manchon.

Il est bien évident que les opérations d'introduction d'un manchon de chemisage et d'expansion hydraulique de ce manchon dans un tube à chemiser seront effectuées successivement pour l'ensemble des tubes du générateur de vapeur dont il est nécessaire d'effectuer le chemisage. On évite ainsi de démonter l'outillage utilisé avant que l'ensemble des tubes du générateur de vapeur à chemiser ne soit muni d'un manchon fixé provisoirement par expansion diamètrale. De la même façon, on effectuera les unes à la suite des autres, les opérations de dudgeonnage des parties supérieures des manchons, pour tous les tubes à chemiser.

Ces opérations séquentielles sur les tubes du générateur de vapeur seront complétées par une opération de dudgeonnage de la partie inférieure des manchons, par une technique connue de l'art antérieur.

On voit que l'invention permet de limiter ou de supprimer totalement la présence d'un opérateur à l'intérieur de la boîte à eau du générateur de vapeur pour effectuer le chemisage des tubes défectueux de ce générateur de vapeur, tout en évitant l'utilisation d'un outillage multifonctions complexe et encombrant, introduit dans la boîte à eau du générateur de vapeur.

L'invention permet de limiter la partie du dispositif introduite dans la boîte à eau à ce qui est vraiment nécessaire pour réaliser les opérations in situ à l'intérieur du tube à chemiser. Les éléments de motorisation et de commande sont tous disposés à l'extérieur de la boîte à eau, ce qui permet d'accéder très facilement à ces éléments pour piloter les opérations de chemisage ou pour en effectuer la réparation. Le procédé et le dispositif selon l'invention permettent également de limiter l'importance de la partie de l'outillage susceptible de subir une irradiation à l'intérieur de la boîte à eau du générateur de vapeur. Cet outillage peut être particulièrement simple et son introduction, ainsi que l'introduction du manchon dans la boîte à eau sont réalisées de façon très simple et très sûre grâce à un guidage par un tube flexible continu.

Les opérations nécessitant la présence d'un opérateur dans la boîte à eau ou l'utilisation d'un dispositif complexe et encombrant sont limitées au dudgeonnage de la partie inférieure du manchon.

On peut imaginer l'utilisation d'outillages différents de ceux qui ont été décrits pour réaliser l'expansion diamètrale du manchon et le dudgeonnage de sa partie supérieure.

Le guidage du manchon et des outillages ainsi que la transmission des mouvements au manchon et aux outillages à l'intérieur de la boîte à eau peuvent être assurés par des tubes flexibles ou souples d'une structure différente de celle qui a été décrite.

Enfin, l'invention s'applique au chemisage de tout tube d'un générateur de vapeur à eau sous pression, quelle que soit sa localisation dans la boîte à eau du générateur de vapeur et quelle que soit l'épaisseur de la plaque tubulaire dans laquelle est fixé le tube à chemiser.

**Revendications**

1. Procédé de chemisage à distance d'un tube (8) de générateur de vapeur d'un réacteur nucléaire à eau sous pression, le tube (8) ayant deux extrémités serties dans une plaque tubulaire (2) en-dessous de laquelle le générateur de vapeur constitue une boîte à eau (3) accessible depuis l'extérieur par une ouverture de visite (9) et le procédé comportant, de manière connue, l'introduction d'un manchon (12) par une ouverture de visite de la boîte à eau jusqu'à un endroit situé sous la plaque tubulaire, à la verticale de l'ouverture de visite, le déplacement du manchon à l'intérieur de la boîte à eau jusqu'à une position située à la verticale d'une des extrémités du tube à chemiser, l'introduction du manchon dans le tube, l'expansion diamétrale dans au moins deux zones situées au voisinage de ses extrémités, l'une de ces zones étant dans l'épaisseur de la plaque tubulaire et l'autre au-delà de cette plaque tubulaire et le sertissage par dudgeon du manchon dans chacune des zones d'expansion par commande de moyens moteurs depuis l'extérieur de la boîte à eau, caractérisé par le fait:

— qu'on introduit un manchon (12) à l'intérieur duquel est placé un expanseur hydraulique (34) dans un tube de chargement (24) à l'extérieur de la boîte à eau, ledit tube de chargement étant relié à un tube flexible (31) passant par l'ouverture de visite de la boîte à eau.

— qu'on introduit le manchon (12) dans la boîte à eau (3), à l'intérieur du tube flexible (31) dont l'extrémité opposée à son extrémité reliée au tube de chargement (24) est disposée dans la boîte à eau à la verticale de l'ouverture de visite, par déplacement d'un tube souple (30), relié à l'expanseur hydraulique (34) et comportant des moyens d'alimentation en fluide hydraulique sous pression de l'expanseur,

— qu'on déplace l'extrémité (2A) du tube flexible (31) disposée dans la boîte à eau (3) et contenant le manchon 12, jusqu'à une position située sous la plaque tubulaire (2), à la verticale d'une des extrémités du tube (8) à chemiser,

— qu'on introduit le manchon (12) dans le tube (8), par déplacement du tube souple (30) dans le tube flexible (31),

— qu'on réalise l'expansion diamétrale du manchon (12) à l'intérieur du tube (8), en alimentation l'expanseur en fluide hydraulique sous pression,

— qu'on réalise le dudgeonnage du manchon (12) dans la zone située en dehors de la plaque tubulaire (2), par introduction d'un outil de dudgeonnage dans la manchon, par l'intermédiaire du tube flexible (31), par déplacement à l'intérieur du tube flexible (31), d'un élément souple tubulaire (61) auquel est fixé l'outil de dudgeonnage,

— et qu'on réalise le dudgeonnage par l'outil de dudgeonnage relié à des moyens moteurs (67, 74, 75) situés à l'extérieur de la boîte à eau par un élément flexible (76) passant dans l'élément tubulaire souple (61).

2. Dispositif pour la mise en œuvre du procédé suivant la revendication 1 comportant un moyen de manutention (19) muni d'un bras (20) connu en soi dont l'extrémité peut venir se placer à la verticale de l'un quelconque des tubes (8) du générateur de vapeur, sous la plaque tubulaire (2), caractérisé par le fait qu'il comporte en outre un élément tubulaire de guidage (21) fixé à l'extrémité du bras (20) dans une direction perpendiculaire à la plaque tubulaire (2),

— un tube flexible (31) fixé à l'une de ses extrémités à l'élément tubulaire de guidage (21) passant par l'ouverture de visite (10) et ayant son autre extrémité à l'extérieur de la boîte à eau,

— un ensemble (22, 23, 24) de chargement et de manutention qui peut être relié à l'extrémité du tube flexible (31) extérieure à la boîte à eau pour le déplacement, à l'intérieur du tube flexible (31), d'un manchon (12) à l'intérieur duquel est placé un expanseur hydraulique (34) et qui est fixé, pour son déplacement, à l'extrémité d'un élément tubulaire souple (30) comportant des moyens d'alimentation en fluide hydraulique sous pression de l'expanseur (34),

— et un ensemble de manutention et de dudgeonnage (60, 61, 62) comportant un outillage de dudgeonnage (60) fixé à l'extrémité d'un élément souple tubulaire (61) associé à un dispositif de manutention (62) disposé à l'extérieur de la boîte à eau pour son déplacement dans le tube flexible (31) et relié à des moyens moteurs (67, 74, 75) par un élément flexible (76) passant dans l'élément tubulaire souple (61).

3. Dispositif de chemisage suivant la revendication 2, caractérisé par le fait que l'ensemble de chargement et de manutention du manchon comporte un enrouleur-dérouleur (22), un tireur-pousseur à galets (23) et un tube de chargement (24) relié par l'une de ses extrémités à l'extrémité du tube (31) située à l'extérieur de la boîte à eau, et par son autre extrémité à la sortie du tireur-pousseur (23), l'enrouleur-dérouleur (21) renfermant un tube souple (30) passant dans le tireur-pousseur (23) à sa sortie de l'enrouleur (22).

4. Dispositif de chemisage suivant la revendication 3, caractérisé par le fait que le tube souple (30) renferme un tube capillaire (52) pour l'alimentation en fluide hydraulique de l'expanseur (34), l'extrémité du tube capillaire (52) opposée à l'extrémité reliée à l'expanseur (34) étant reliée par l'intermédiaire d'un raccord tournant (25) placé sur l'enrouleur (22) à une source de fluide sous pression (26).

5. Dispositif de chemisage suivant la revendication 3, caractérisé par le fait que le tube de chargement (24) comporte deux demi-couvercles semi-cylindriques (24a et 24b) articulés sur un support (38) pour passer d'une position ouverte à une position fermée et inversement.

6. Dispositif de chemisage suivant la revendication 4, caractérisé par le fait que l'élément tubulaire de guidage (21) est monté glissant perpendiculairement à la plaque tubulaire (2), dans un palier (33) porté par l'extrémité du bras (20) et mobile dans cette direction dans un sens ou dans l'autre, grâce à un vérin double effet (36).

7. Dispositif de chemisage suivant la revendication 6, caractérisé par le fait que l'élément tubulaire de guidage (21) comporte une partie profilée (21a) en saillie vers l'intérieur, pour effectuer le retrait par traction du mandrin (34) introduit dans le manchon (12).

8. Dispositif de chemisage suivant la revendication 2, caractérisé par le fait que l'ensemble de manutention et de dudgeonnage comporte un outillage de dudgeonnage (60) relié à une dudgeonneuse (67) comportant des moyens d'entraînement, par un tube souple (61) et une machine de manutention et d'introduction (62) pour le déplacement du tube souple (61).

9. Dispositif de chemisage suivant la revendication 8, caractérisé par le fait que le dispositif de manutention (62) comporte un ensemble de plaquettes (66) mobiles, guidées dans un carter (63) suivant une direction perpendiculaire à l'ensemble des plaquettes (66) et reliées entre elles par des chaînettes (68) ainsi qu'un ensemble (69, 70, 71), de déplacement d'une plaquette d'extrémité (66a) sur laquelle est fixée l'extrémité du tube souple (61) qui traverse les autres plaquettes dans une direction perpendiculaire à ces plaquettes dans lesquelles il est monté glissant.

10. Dispositif de chemisage suivant la revendication 8, caractérisé par le fait que l'outil de dudgeonnage comportant, de manière connue, un corps (79) dans lequel sont montés rotatifs des galets (78) et une aiguille conique (77) est reliée par son corps (79) à l'extrémité du tube souple (61) opposée au dispositif de manutention (62) et par son aiguille (77) à l'extrémité de l'élément flexible (76) passant à l'intérieur du tube souple (61) et relié à son extrémité opposée à l'aiguille (77), au piston (75) d'un vérin (74) et à des moyens moteurs de l'élément (67) permettant l'entraînement en rotation flexible (76) et de l'aiguille (77).

**Claims**

1. Process for remotely lining a tube (8) of a steam generator of a pressurized water nuclear reactor, the tube (8) having two ends crimped in a tube plate (2) below which the steam generator forms a water box (3) accessible from outside via a manhole (9) and the process comprising, in known manner, the insertion of a liner (12) through a manhole in the water box as far as a location situated below the tube plate and vertically aligned with the manhole; displacement of the liner inside the water box up to a position located vertically in line with one end of the tube to be lined; insertion of the liner into the tube; diametral expansion in at least two regions situated in the vicinity of its ends; one of these regions being within the thickness of the tube plate and the other beyond this tube plate and the crimping of the liner in each of the expansion regions; by means of a roller-expander; under the control of drive means situated outside the water box; characterised in that:

  — a liner (12) is inserted; inside which is placed a hydraulic expander (34) in a charging tube (24) outside the water box; said charging tube being connected to a flexible tube (31) passing through the manhole in the water box;

  — the liner (12) is inserted in the water box (3), inside the flexible tube (31); the end of which, opposed to its end connected to the charging tube (24) is arranged in the water box vertically aligned with the manhole, by the displacement of a flexible tube (30) connected to the hydraulic expander (34) and comprising means for supplying pressurized hydraulic fluid to the expander,

  — the end (2A) of the flexible tube (31) located in the water box (3) and containing the liner (12) is moved into a position located below the tube plate (2), vertically in line with one end of the tube (8) which is to be lined;

  — the liner (12) is inserted in the tube (8) by displacement of the flexible tube (30) in the flexible tube (31);

  — diametral expansion of the liner (12) is carried out inside the tube (8) by supplying pressurised hydraulic fluid to the expander;

  — the liner (12) is subjected to roller-expansion in the region located outside the tube plate (2); by the insertion of a roller-expanding tool in the liner, using the flexible tube (31); by displacement inside the flexible tube (31) of a flexible tube element (61) to which the roller-expansion tool is attached;

  — and the roller-expansion is carried out using the roller-expanding tool connected to drive means (67; 74; 75) located outside the water box by a flexible element (76) passing into the flexible tubular element (61).

2. Apparatus for carrying out the process according to Claim 1; comprising handling means (19) equipped with an arm (20) known per se; the end of which can be placed vertically in line with any one of the tubes (8) of the steam generator, under the tube plate (2), characterised in that it additionally, comprises a tubular guiding member (21) attached to the end of the arm (2) in a direction at right angles to the tube plate (2);

  — a flexible tube (31) attached at one end to the tubular guiding member (21) passing through the manhole (10) and having its other end outside the water box,

  — a loading and manipulating assembly (22, 23, 24) which can be connected to the end of the flexible tube (31) outside the water box for moving, inside the flexible tube (31), a liner (12) inside which there is a hydraulic expander (34) and which is attached, for displacement thereof, to the end of a flexible tubular member (30) comprising means for supplying pressurized hydraulic fluid to the expander (34),

  — and a manipulating and roller-expanding assembly (60, 61, 62) comprising roller-expanding equipment (60) attached to the end of a flexible tubular member (61) associated with a manipulating device (62) arranged outside the water box for displacement thereof in the flexible tube (31) and connected to drive wheels (67, 74, 75) by means of a flexible element (76) passing into the flexible tubular member (61).

3. Lining device according to Claim 3, characterised in that the assembly for loading and manipulating the liner comprises a winding and unwinding device (22), a puller-pusher with rollers (23) and a loading tube (24) connected at one of its ends to the end of the tube (31) situated outside the water box and at its other end to the outlet of the puller-pusher (23), the winding and unwinding device (21) containing a flexible tube (30) passing through the puller-pusher (23) on leaving the winding device (22).

4. Lining device according to Claim 3, characterised in that the flexible tube (30) contains a capillary tube (52) for supplying hydraulic fluid to the expander (34), the end of the capillary tube (52) remote from the end connected to the expander (34) being connected to a source of pressurized fluid (26) by means of a rotary coupling (25) placed on the winding device (22).

5. Lining device according to Claim 3, characterised in that the loading tube (24) comprises two semicylindrical half-covers (24a and 24b) articulated on a support (38) for changing from an open position to a closed position and vice versa.

6. Lining device according to Claim 4, characterised in that the tubular guiding member (21) is mounted so that it can slide at right-angles to the tube plate (2) in a bearing (33) carried by the end of the arm (20) and capable of being moved either way in this direction by means of a double-action jack (36).

7. Lining device according to Claim 6; characterised in that the tubular guiding member (21) comprises a profiled component (21a) projecting inwards, for performing the withdrawal by pulling of the mandrel (34) inserted into the liner (12).

8. Lining device according to Claim 2, characterised in that the manipulating and roller-expanding assembly comprises a roller-expanding machine (60) connected to a roller-expanding machine (67) comprising means of driving by means of a flexible tube (61) and a manipulation and insertion machine (62) for moving the flexible tube (61).

9. Lining device according to Claim 8, characterised in that the manipulating device (62) comprises a set of movable plates (66), guided in a casing (63) in a direction perpendicular to the set of plates (66) and connected to each other by small chains (68) and an assembly (69, 70, 71) for moving an end plate (66a) to which is fastened the end of the flexible tube (61) which passes through the other plates in a direction at right angles to these plates in which it is slidably mounted.

10. Lining device according to Claim 8, characterised in that the roller-expanding tool comprising, in a known manner, a body (79) in which there are mounted rotatable rollers (78) and a conical needle (77), is connected through its body (79) to the end of the flexible tube (61) remote from the manipulating device (62) and through its needle (77) to the flexible end (76) passing inside the tube of the flexible member (61) and connected at its end remote from the needle (77) to the piston (75) of a jack (74) and to drive means (67) allowing the flexible member (76) and the needle (77) to be driven in rotation.

## Patentansprüche

1. Verfahren zum Ferneinbringen eines Dampferzeugerrohres (8) eines nuklearen Druckwasserreaktors, wobei das Rohr (8) zwei in eine rohrförmige Platte (2) eingepreßte Enden aufweist, unter der der Dampferzeuger einen Wasserbehälter (3) bildet, der von außen durch eine Einsteigöffnung (9) erreichbar ist, und das Verfahren in an sich bekannter Weise aufweist, das Einführen einer Muffe (12) durch eine Einsteigöffnung des Wasserbehälters bis zu einem Ort, der unterhalb der rohrförmigen Platte angeordnet ist, vertikal zur Einsteigöffnung, die Verschiebung der Muffe im Inneren des Wasserbehälters bis zu einer Stellung vertikal zu einem der Enden des einzubringenden Rohres, die Einführung der Muffe in das Rohr, die diametrale Dehnung in wenigstens zwei Zonen, die in der Nähe seiner Enden liegen, wobei eine der Zonen in der Dicke bzw. Wand der rohrförmige Platte und die andere über diese rohrförmigen Platte hinaus angeordnet sind, und das Klemmen durch eine Röhreneinwalzvorrichtung der Muffe in jede der Dehnungszonen durch Betätigung von Motoreinrichtungen von außerhalb des Wasserbehälters erfolgt, dadurch gekennzeichnet, daß:

– eine Muffe (12) in deren Inneren ein hydraulischer Dehner (34) angeordnet ist, in ein Chargierungsrohr (24) außerhalb des Wasserbehälters eingeführt wird, wobei das Chargierungsrohr mit einem flexiblen Rohr (31) verbunden ist, das durch die Einsteigöffnung des Wasserbehälters hindurchtritt;

– die Muffe (12) in den Wasserbehälter (3) in das Innere des flexiblen Rohres (31) eingeführt wird, dessen Ende, das seinem mit dem Chargierungsrohr (24) verbundenen Ende gegenüberliegt, in dem Wasserbehälter vertikal zur Einsteigöffnung angeordnet wird, durch Bewegen eines biegsamen Rohres (30), das mit dem hydraulischen Dehner (34) verbunden ist und Zufuhreinrichtungen von Hydraulikfluid unter Druck des Dehners aufweist;

– das Ende (2A) des flexiblen Rohres (31), das in dem Wasserbehälter (3) angeordnet ist und die Muffe (12) enthält, bis zu einer Stellung bewegt wird, die unterhalb der rohrförmigen Platte (2) angeordnet ist, senkrecht zu einem der Enden des einzuführenden Rohres (8);

– die Muffe (12) in das Rohr (8) eingeführt wird, durch Bewegen des biegsamen Rohres (30) in dem flexiblen Rohr (31);

– die diametrale Dehnung bzw. Expansion der Muffe (12) im Inneren des Rohres (8) durch Speisung des Dehners mit Hydraulikfluid unter Druck erzeugt wird;

– das Röhreneinwalzen der Muffe (12) in die Zone außerhalb der rohrförmigen Platte (2) durch Einführen eines Röhreneinwalzwerkzeuges in die Muffe mittels des flexiblen Rohres (31) erzeugt wird, durch Bewegen eines rohrförmigen biegsamen Elementes (61) im Inneren des flexiblen Rohres (31), zu dem das Röhreneinwalzwerkzeug befestigt ist, und

– das Röhreneinwalzen durch das Röhreneinwalzwerkzeug erzeugt wird, das mit Motoreinrichtung (67, 74, 75) verbunden ist, die außen an dem Wasserbehälter durch ein flexibles Element (76) angeordnet sind, das durch das biegsame rohrförmige Element (61) hindurchtritt.

2. Vorrichtung für die Durchführung des Verfahrens nach Anspruch 1, mit einer Fördereinrichtung (19), die mit einem an sich bekannten Arm (20) versehen ist, dessen Ende sich vertikal zu jeglichem der Rohre (8) des Dampferzeugers setzen kann, unter der rohrförmigen Platte (2), dadurch gekennzeichnet, daß sie weiterhin ein rohrförmiges Führungselement (21), das an dem Ende des Arms (20) in einer Richtung senkrecht zur rohrförmigen Platte (2) befestigt ist,

– ein flexibles Rohr (31), das an einem seiner Enden an dem rohrförmigen Führungselement (21) befestigt ist, das durch die Einsteigöffnung (10) hindurchtritt, und dessen anderes Ende sich außerhalb des Wasserbehälters befindet,

– eine Anordnung (22, 23, 24) des Chargierens und Förderns, die verbunden sein kann mit dem Ende des flexiblen Rohres (31), außerhalb des Wasserbehälters für die Bewegung im Inneren des flexiblen Rohres (31), einer Muffe (12), in deren Inneren ein hydraulischer Dehner (34) angeordnet ist, und die für ihre Bewegung an dem Ende eines biegsamen rohrförmigen Elementes (30) befestigt ist, das Zufuhreinrichtungen von Hydraulikfluid unter Druck für den Dehner (34) aufweist, und

– eine Förder- und Röhreneinwalzanordnung (60, 61, 62) aufweist, die ein Röhreneinwalzwerkzeug (60) aufweist, das am Ende eines biegsamen rohrförmigen Elements (61) befestigt ist, das einer Fördervorrichtung (62) zugeordnet ist, die außerhalb des Wasserbehälters für seine Bewegung in dem flexiblen Rohr (31) angeordnet ist, und mit Motoreinrichtungen (67, 74, 75) durch ein biegsames Element (76) verbunden ist, das das biegsame rohrförmige Element (61) durchsetzt.

3. Einbringvorrichtung nach Anspruch 2, dadurch gekennzeichnet, daß die Chargierungs- und Fördereinrichtung der Muffe einen Auf- und Abwickler (22), eine Zieh- und Druckvorrichtung mit Walzen (23) und ein Chargierungsrohr (24) aufweist, das mit einem seiner Enden mit dem Ende des Rohres (31) verbunden ist, das außerhalb des Wasserbehälters angeordnet ist, und mit seinem anderen Ende mit dem Ausgang der Zieh- und Druckvorrichtung (23) verbunden ist, wobei der Auf- und Abwickler (21) ein biegsames Rohr (30) umschließt, das durch die Zieh- und Druckvorrichtung (23) am Ende des Aufwicklers (22) vorbeiläuft.

4. Einbringvorrichtung nach Anspruch 3, dadurch gekennzeichnet, daß das biegsame Rohr (30) ein Kapillarrohr (52) umschließt, für die Zufuhr von Hydraulikfluid zu dem Dehner (34), wobei das Ende des Kapillarrohres (52), das dem mit dem Dehner (34) verbundenen Ende gegenüberliegt, mittels einer drehenden Verbindung (25), die auf dem Aufwickler (22) angeordnet ist, mit einer Quelle eines Druckfluids (26) verbunden ist.

5. Einbringvorrichtung nach Anspruch 3, dadurch gekennzeichnet, daß das Chargierungsrohr (24) zwei halbzylindrische Halbdeckel (24a und 24b) aufweist, die auf einem Träger (38) angelenkt sind, um von einer offenen Stellung in eine geschlossene Stellung und umgekehrt zu gelangen.

6. Einbringvorrichtung nach Anspruch 4, dadurch gekennzeichnet, daß das rohrförmige Führungselement (21) gleichbeweglich senkrecht zur rohrförmigen Platte (2) in einem Lager (33) angeordnet ist, das vom Ende des Arms (20) getragen und in diese Richtung in die eine oder andere Richtung dank eines doppelwirkenden Stelltriebs (36) beweglich ist.

7. Einbringvorrichtung nach Anspruch 6, dadurch gekennzeichnet, daß das rohrförmige Führungselement (21) einen profilierten Bereich (21a) aufweist, der nach innen vorspringt, um das Zurückziehen durch Antrieb des in die Muffe (12) eingeführten Dornes (34) zu erzeugen.

8. Einbringvorrichtung nach Anspruch 2, dadurch gekennzeichnet, daß die Förder- und Röhreneinwalzanordnung ein Röhreneinwalzwerkzeug (60) aufweist, das mit einem Röhreneingerät (67), das Antriebseinrichtungen aufweist, über ein biegsames Rohr (61) und eine Förder- und Einführmaschine (62) für die Bewegung des biegsamen Rohres (61), verbunden ist.

9. Einbringvorrichtung nach Anspruch 8, dadurch gekennzeichnet, daß die Fördervorrichtung (62) eine Anordnung von beweglichen Platten (66) aufweist, die in einem Gehäuse (63) gemäß einer zur Anordnung der Platten (66) senkrechten Richtung geführt sind, und untereinander durch Ketten (68) verbunden sind, sowie eine Anordnung (69, 70, 71) für die Bewegung einer Endplatte (66a) aufweist, auf der das Ende des biegsamen Rohres (61) befestigt ist, das die anderen Platten in einer Richtung senkrecht zu diesen Platten durchsetzt, in denen es gleitbeweglich angeordnet ist.

10. Einbringvorrichtung nach Anspruch 8, dadurch gekennzeichnet, daß das Röhreneinwalzwerkzeug in an sich bekannter Weise einen Körper (79) aufweist, in den drehbar Walzen (78) angeordnet sind und eine konische Nadel (77) mit ihrem Körper (79) mit dem Ende des biegsamen Rohres (61), gegenüberliegend der Fördervorrichtung (62), und durch seine Nadel (77) mit dem Ende des flexiblen Elementes (76) verbunden ist, das das Innere des biegsamen Rohres (61) durchsetzt, und an seinem anderen Ende gegenüberliegend der Nadel (77) mit dem Kolben (75) eines Stelltriebs (74) und mit Motoreinrichtungen (67) verbunden ist, die den Drehantrieb des flexiblen Elementes (76) und der Nadel (77) erlauben.

## FIG.1

FIG.2

## FIG.3a

## FIG.3b

FIG.5

FIG.4

EP 0 244 283 B1

FIG.6

FIG.7

**FIG.8**

**FIG.9**

EP 0 244 283 B1

FIG.10

FIG.11

EP 0 244 283 B1

FIG.12

EP 0 244 283 B1

# FIG.13

**FIG.14**

**FIG.15**